# EUROPEAN PATENT SPECIFICATION

(11) **EP 4 527 638 B1**
(45) Date of publication and mention of the grant of the patent: **08.07.2026**
(21) Application number: 24201167.4
(22) Date of filing: 18.09.2024
(51) Int. Cl.: B60C 1/00, B60C 11/00, B60C 19/08

(54) **DUAL LAYER TIRE TREAD**
ZWEISCHICHTIGE REIFENLAUFFLÄCHE
BANDE DE ROULEMENT DE PNEUMATIQUE À DOUBLE COUCHE

(30) Priority: 19.09.2023 US 202318470161
(43) Date of publication of application: 26.03.2025
(73) Proprietor: The Goodyear Tire & Rubber Company, Akron, OH 44316 (US)
(72) Inventor: BALAGUER PINO, Adrian Osvaldo, L-2168 Luxembourg (LU); KAES, Christian Jean-Marie, L-9184 Schrondweiler (LU); MICEK, Jaroslaw, L-7740 Colmar-Berg (LU); GODEFROID, Alain Joseph Jose, B-6747 Meix-le-Tige (BE)
(74) Representative: Kutsch, Bernd

(56) References cited:
- EP-A1- 3 335 904
- EP-A2- 2 452 834
- US-A1- 2021 139 678

## Description

The exemplary embodiment relates to a tire tread and, in particular, to a dual layer tire tread with an outer layer or region which provides wet and dry grip, and an interior layer or region, which is only partially covered by the outer layer, formed from a low hysteresis/high tear resistant rubber composition, which also ensures electrical conductivity through the tread.

### BACKGROUND

Radial ply tires are widely used for commercial and passenger vehicles. In such tires, the cord plies are arranged at an angle to the direction of travel, or radially, from the center of the tire. For certain applications, such as racing, the tires are configured to provide good road-holding performance over relatively short periods of time. With this in mind, radial truck tires have been constructed with a dual cap configuration in which the outer, road-contacting surface is formed from a different rubber composition to an adjacent, interior layer. However, such tires are not generally suited to longer races. Known tires are disclosed in the documents EP 2452834 A, EP 3335904 A and US 2021/139678 A.

Commercial truck tires have been described which incorporate different tread compositions. For example, US Pub. No. 2019/0061425 A1 describes a pneumatic tire tread including a radially outermost, ground contacting tread cap and a tread base disposed radially inward of and underlying the tread cap, the tread cap including a central cap zone and lateral cap zones, the lateral cap zones located axially adjacent to the central cap zone and on axially opposite sides of the central cap zone, the central cap zone including a first rubber composition and the lateral cap zones including a second rubber composition.

US Pub. No. 2012/0138203 A1 also describes a pneumatic tire suited to consumer use. The tire has a rubber tread of a cap/base construction including an outer rubber tread cap layer including two or more circumferential, longitudinal rubber tread cap zones formed of rubber compositions which differ in their ratios of silica to carbon black.

Although such dual-layer consumer tires provide good performance for local and regional applications, they would tend to overheat if used for racing applications.

A tire with a dual-layer tire tread is described herein which provides a combination of good wet and dry grip performance, while also improving hysteresis. The exemplary tire is particularly suited to medium radial truck tires for racing and is able to maintain good performance characteristics over longer race times than existing truck racing tires.

### SUMMARY OF THE INVENTION

The invention relates to a tire in accordance with claim 1 and to a method in accordance with claim 15.

Dependent claims refer to preferred embodiments of the invention.

Preferably, the tire is a racing tire.

In accordance with a preferred embodiment, a racing tire includes a tread, the tread including first and second layers. The first layer is formed of a first rubber composition. The first layer defines a first portion of a road-contacting surface of the tread. The second layer is formed of a second rubber composition. The second layer defines a second portion the road-contacting surface of the tread and is partially covered by the first layer. The first rubber composition includes 70 to 92 parts per hundred parts by weight of rubber (phr) of a solution-polymerized styrene butadiene rubber, at least one of an isoprene rubber and a polybutadiene rubber, 50 to 160 phr of silica and a resin. The resin is at a higher phr in the first rubber composition than in the second rubber composition. The second rubber composition includes 70 to 100 phr of a polyisoprene rubber, 5 to 30 phr of silica, and carbon black. The second rubber composition includes carbon black at a higher phr than the first rubber composition.

In various aspects of this preferred embodiment:
The second layer defines a chimney which extends from a base portion, the chimney defining the second portion the road-contacting surface of the tread. The chimney may define an annulus around the tire. The chimney may define less than 15 % of a width of the road-contacting surface of the tire.

The first portion of the road-contacting surface is adjacent to an inside shoulder of the tire and the second portion the road-contacting surface is adjacent an outside shoulder of the tire. The second layer may define a step intermediate the outside shoulder and the inside shoulder of the tire. The second layer may define at least 20 % of a width of the road-contacting surface of the tire and/or up to 50 % of the width of the road-contacting surface of the tire. The second layer may have higher tear resistance and abrasion resistance properties. This helps to avoid premature wear/tear.

The first rubber composition comprises at least 10 phr of the resin. The resin in the first rubber composition may be selected from DCPD/C9 resins, alpha methyl styrene resins, styrene/alpha methyl styrene resins, modified rosins and mixtures thereof.

The second rubber composition comprises at least 30 phr of carbon black.

The first and second rubber compositions each comprise an organosilane coupling agent.

The first and second rubber compositions each comprise a cure package, the cure package comprising a sulfur-based curing agent, a cure activator, and a cure accelerator.

In accordance with another preferred embodiment, a method of forming a tread for a racing tire includes forming a first rubber composition, the first rubber composition including 70 to 92 phr of a solution-polymerized styrene butadiene rubber, at least one of an isoprene rubber and a polybutadiene rubber, 50 to 160 phr of silica, at least 10 phr of a resin, and 0-25 phr of carbon black. A second rubber composition is also formed, the second rubber including comprising 70 to 100 phr of a polyisoprene rubber, 5 to 25 phr of silica, and 20-60 phr of carbon black. A first layer is formed from the first rubber composition such that the first layer defines a first portion of a road-contacting surface of the tread. A second layer is formed from the second rubber composition, such that the second layer defines a second portion the road-contacting surface of the tread and is partially covered by the first layer. The first and second layers are cured to form the tire tread.

In accordance with another preferred embodiment, a racing tire includes a tread. The tread includes a first layer formed of a first rubber composition, the first layer defining a first portion of a road-contacting surface of the tread, and a second layer formed of a second rubber composition, the second layer defining a second portion the road-contacting surface of the tread and being partially covered by the first layer. The first rubber composition includes 70 to 92 phr of a solution-polymerized styrene butadiene rubber, 0-30 phr of a polyisoprene rubber, 0-30 phr of a polybutadiene rubber, 50 to 160 phr of silica, 0-25 phr of carbon black, 2-70 phr of processing oil, 10-70 phr of resin, 2-20 phr of an organosilane coupling agent, and a cure package including a sulfur-based curing agent, zinc oxide, a fatty acid, and an accelerator. The second rubber composition includes 70 to 100 phr of a polyisoprene rubber, 5 to 25 phr of silica, 30-60 phr of carbon black, no more than 5 phr of resin, 1-10 phr of processing oil, and a cure package including a sulfur-based curing agent, zinc oxide, a fatty acid, and an accelerator.

In aspects of this preferred embodiment:
The first rubber composition may include 75 to 90 phr of the solution-polymerized styrene butadiene rubber, 10-25 phr of the polyisoprene rubber, 0-2 phr of the polybutadiene rubber, 100 to 150 phr of the silica, 0-15 phr of the carbon black, 4-10 phr of the processing oil, and 20-60 phr of the resin.

The first rubber composition may include 85 to 92 phr of the solution-polymerized styrene butadiene rubber, 0-2 phr of the polyisoprene rubber, 8-15 phr of the polybutadiene rubber, 90 to 120 phr of the silica, 15-25 phr of the carbon black,5-60 phr of the processing oil, and 10-30 phr of the resin.

The solution-polymerized styrene butadiene rubber may include 30 to 70 phr of a first solution-polymerized styrene butadiene rubber, the first solution-polymerized styrene butadiene rubber having a bound styrene content of from 30 to 50 wt. %, a vinyl 1,2 content of from 10 to 40 wt. %, based on the rubber weight, and a glass transition temperature (Tg) of -40° C to -20° C, and 30 to 70 phr of a second solution-polymerized styrene butadiene rubber, the second solution-polymerized styrene butadiene rubber having a bound styrene content of from 25 to 45 wt. %, a vinyl 1,2 content of from 20 to 60 wt. %, based on the rubber weight, and a Tg of from -30° C to -5° C. The first and second solution-polymerized styrene butadiene rubbers may have a difference in Tg of 10°C to 20° C. At least one of the first and second solution-polymerized styrene butadiene rubbers may have a weight average molecular weight of greater than 1,000,000.

The second rubber composition may include 90 to 100 phr of the polyisoprene rubber, 10 to 20 phr of the silica, 30-50 phr of the carbon black, no more than 2 phr of the resin, and 1-5 phr of the processing oil.

### BRIEF DESCRIPTION OF THE DRAWINGS

FIGURE 1 is a cross-sectional view of a tire including a tread in accordance with a first exemplary embodiment,
FIGURE 2 is an enlarged cross-sectional view of the tire tread of FIGURE 1; and
FIGURE 3 is a cross-sectional view of another embodiment of a tire tread which is suited to use in the tire of FIGURE 1.

### DETAILED DESCRIPTION OF PREFERRED EMBODIMENYS OF THE INVENTION

The exemplary embodiment relates to a tire tread and, in particular, to a dual layer tire tread with an outer layer or region, which provides wet and dry grip, and an interior layer or region, which is only partially covered by the outer layer, which is formed from a low hysteresis rubber composition.

In one aspect, the tire is a radial truck tire suited to use as a racing tire, in particular for a racing truck tire. In such an application, the tire tread provides improved wet and dry grip and good treadwear.

### Definitions

As used herein, the terms "rubber" and "elastomer" may be used interchangeably unless otherwise indicated. The terms "cure" and "vulcanize" may be used interchangeably unless otherwise indicated.

The term "tread," refers to both the region of a tire that comes into contact with the road under normal inflation and load as well as any subtread.

The term "phr" means parts per one hundred parts rubber by weight. In general, using this convention, a rubber composition includes 100 parts by weight of rubber/elastomer. The claimed composition may include other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. The term "phf" means parts per one hundred parts by weight of fillers in the rubber composition.

Molecular weights of elastomers, rubber compositions, and resins, such as Mₙ (number average molecular weight), M_{w} (weight average molecular weight) and M_{z} (z average molecular weight), are determined herein using gel permeation chromatography (GPC) according to ASTM D5296-19, "Standard Test Method for Molecular Weight Averages and Molecular Weight Distribution of Polystyrene by High Performance Size-Exclusion Chromatography," using polystyrene calibration standards.

The glass transition temperature (Tg) of an elastomer or elastomer composition is the glass transition temperature(s) of the respective elastomer or elastomer composition in its uncured state or possibly a cured state in a case of an elastomer composition.

Tg values of elastomers are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

The glass transition temperature Tg for a resin is determined as a peak midpoint by a differential scanning calorimeter (DSC) at a temperature rate of increase of 10° C per minute, according to ASTM D6604-00 (2017), "Standard Practice for Glass Transition Temperatures of Hydrocarbon Resins by Differential Scanning Calorimetry."

The glass transition temperature Tg for an oil is determined as a peak midpoint by a differential scanning calorimeter (DSC) at a temperature rate of increase of 10°C per minute, according to ASTM E1356-08 (2014), "Standard Test Method for Assignment of the Glass Transition Temperatures by Differential Scanning Calorimeter."

The softening point of a resin is determined according to ASTM E28-18, "Standard Test Methods for Softening Point of Resins Derived from Pine Chemicals and Hydrocarbons, by Ring-and-Ball Apparatus," which is sometimes referred to as a ring and ball softening point.

Mooney viscosity (ML 1+4) is measured in M.U. at 100°C according to ASTM D1646-19a, "Standard Test Methods for Rubber - Viscosity, Stress Relaxation, and Pre-Vulcanization Characteristics (Mooney Viscometer)."

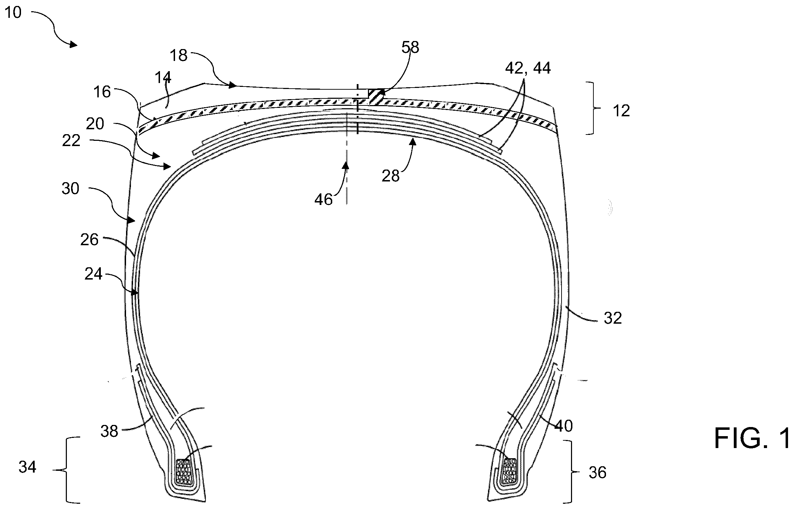

FIGURE 1 illustrates a pneumatic tire 10, such as a medium radial truck (MRT) tire, in accordance with one aspect of the exemplary embodiment. The tire includes a tread 12 with an asymmetric profile, having a first tread layer or region 14 and a second tread layer region 16, which extends inwardly of the first layer, and which is partially, but not completely, covered by the first tread layer 14. Together, the first and second tread layers 14, 16 define a ground-contacting surface 18 of the tire tread. The first and second tread layers are formed from different rubber compositions, to provide the tire tread with a balance of properties.

The second tread layer 16 is in contact with a reinforced carcass 20, which includes a set 22 of reinforcing plies. One or more of the plies are referred to as belt plies 24, 26. Plies 24, 26 are reinforced with cords (not shown) formed of fabric, polymer filaments, and/or metal. The cords are generally inclined at an angle of 10° to 35° in a radial tire. The cords in each belt ply 24, 26 are parallel to each other and crossed relative to the cords in the adjacent ply. The carcass 20 may define an inner surface 28 of the tire 10, as shown. During operation, the inner surface 28 is positioned adjacent to the wheel (not shown) of a vehicle, such as a truck. Alternatively, the tire 10 may be provided with an additional layer, such as an innerliner (not shown) which defines the inner surface 28 of the tire.

The carcass 20 defines sidewall regions 30, 32 of the tire, which are connected to and extend from the lateral edges of the tread 12. At the radially inner ends of each sidewall region 30, 32 is a bead region 34, 36. The belt ply or plies 24, 26 extend from one bead region to the opposing bead region and may include turnup regions 38, 40.

An additional ply or plies 42, 44, etc., are referred to as overlay plies. The overlay plies are located radially outward of the belt plies 24, 26, i.e., are closer to the road contacting surface 18 than the belt plies. The plies 42, 44 may incorporate cords (not shown), which are inclined at zero to 5° degrees relative to the equatorial plane 46 of the tire.

It is to be appreciated that the construction of the carcass 20 is not limited to that described with reference to FIGURE 1.

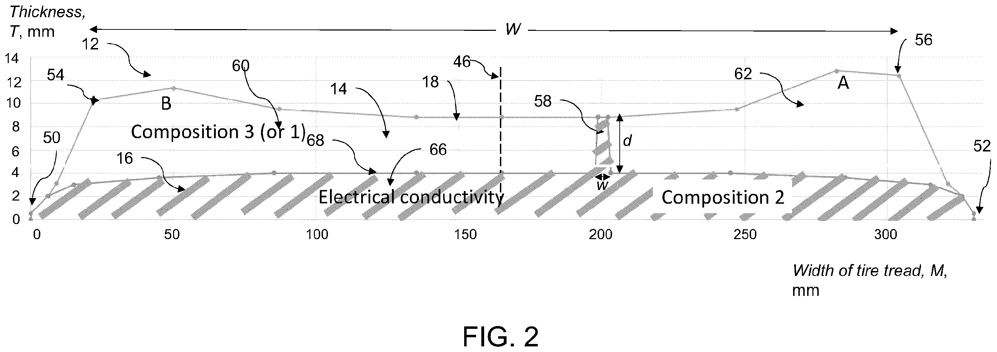

With reference also to FIGURE 2, one embodiment of the tire tread 12 is illustrated as a graph of tread thickness T, in mm, vs width M of the tire tread, in mm, from the road side (outside shoulder) 50 to the drum side (inside shoulder) 52 of the tire. As will be appreciated, the tread thickness T may be different from that shown, while following the same general contours. For example, the tread thickness T may range from 6-18 mm at its thickest point. Additionally, while not shown, the road-contacting surface 18 of the tire is generally indented with a suitable tread pattern. For example, the tread may include two approximately equally spaced continuous grooves between the inside and outside shoulders and may include additional indentations/protrusions. The tread has an asymmetric contour, protruding outward (in region A) adjacent to the inside shoulder more than (in region B) adjacent to the outside shoulder. As will be appreciated, the road-contacting surface 18 is curved between the measurement points (illustrated as dots), rather than being angular.

In the embodiment of FIGURE 2 ("chimney design"), the first tread layer 14 extends from a road side (outside shoulder) edge 54 of the road-contacting surface 18 to a drum-side (inside shoulder) edge 56, with the exception of a narrow chimney 58. The chimney serves to conduct electrical charge away from the road-contacting surface 18 to the second tread layer 16, where it is dissipated. The chimney may be aligned parallel to the central axis 46 of the tire. The chimney 58 may have a width w, at a widest point, of less than 10% of a width W of the road-contacting surface 18. For example, w may be from 5-20 mm and/or up to 15 %, or up to 10 %, or at least 2 %, or at least 4% of the width W of the road-contacting surface 18. The chimney 58 may extend completely around the tire, forming an annulus, which splits the first layer 14 into a road side portion 60, adjacent to the road side 50 of the tire, and a drum side portion 62, adjacent to the drum side 52 of the tire. In this embodiment, the chimney 58 maintains continuous contact with the road to provide electrical contact. Alternatively, the chimney 58 may extend only partially around the tire and, optionally, there may be two or more similarly-configured chimneys, spaced around the tire. The second layer 16, which incorporates the chimney 58, includes a base portion 66, which is spaced from the road-contacting surface 18 by the first layer 14. The chimney(s) 58 extends from the base portion 66 of the layer 16 to the road-contacting surface 18. The chimney may be located intermediate the drum side 52 of the tire and axis 46.

The first and second tread layers 14, 16 are in direct contact at an interface 68. A depth d of the chimney, between the road contacting surface and the interface 68, may be at least 2 mm, or at least 4 mm or up to 16 mm, or up to 12 mm, or up to 10 mm.

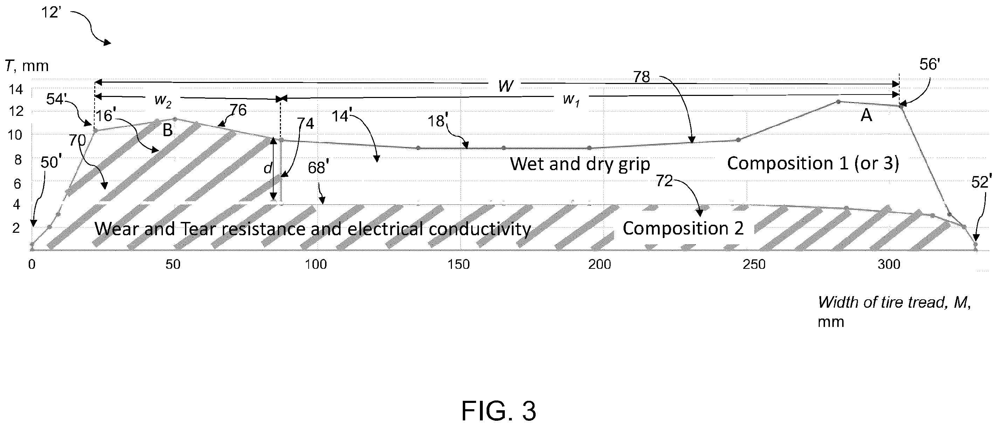

With reference now to FIGURE 3, another embodiment of a tire tread 12' is illustrated ("L-shaped design"), which can be used in the tire 10 of FIGURE 1. The tire tread 12' is similarly configured to the tire tread 12, with similar elements denoted by a prime ( ' ), while different elements are given new numbers. In this embodiment, the second tread layer 16' has an L-shaped configuration, whereby the second tread layer 16' includes a thicker, road side portion 70 and a thinner, drum side portion 72, which are connected by a step 74 of thickness d. The thicker portion 70 of the second tread layer 16' defines a first portion 76 of the road-contacting surface 18', adjacent to the road side 50' of the tire. The first tread layer 14' defines a remaining, second portion 78 of the road-contacting surface 18', adjacent the drum side 52' of the tire. The second portion 78 may occupy at least 70 %, or at least 75%, or up to 90%, or up to 85% of area of the road-contacting surface 18 of the tire, with the first portion occupies the remainder. A ratio of a width w₁ of the road-contacting surface 18' defined by the first tread layer 14' to a width w₂ of the road-contacting surface 18' defined by the second tread layer 16' may be selected to provide a desirable balance between the wet and dry grip performance and the wear and tear on the tire during a race. For example, the ratio of w₁: w₂ may be at least 1.5:1, or at least 1.8:1, or at least 2:1, or at least 2.5:1, or at least 3:1, or up to 5:1, or up to 4:1, or up to 3.5:1.

The illustrated step 74 between the thicker and thinner portions 70, 72 defines a sharp change (of depth d) between the thicker and thinner portions 70, 72. Alternatively, the step 74 may define a more gradual change and thus have a gradually increasing depth varying between 0 and d. d may be at least 2 mm, or at least 4 mm or up to 16 mm, or up to 12 mm, or up to 10 mm. A ratio of the volume of layer 16' to layer 14' maybe at least 50 : 50, or at least 60: 40.

It has been found that on a race track, the road side of the tire in the embodiment of FIGURE 2 suffers greater tear and wear than the drum side. In the embodiment of FIGURE 3, having a harder wearing rubber composition (e.g., based on natural rubber) defining the road contacting surface on the road side allows better resistance to tear and wear over the relatively short race times (generally an hour or less).

As with the embodiment of FIGURE 2, the first and second tread layers 14', 16' are formed from different rubber compositions. The rubber composition used on the inside shoulder is one which provides a good wet and dry grip, while the rubber composition used on the outside shoulder provides a good tear resistance, good electrical conductivity, lower hysteresis and good wear resistance.

### Rubber Compositions of the First and Second Tread Layers

A first rubber composition of the first layer 14, 14' is formulated to provide a good wet and dry grip.

A second rubber composition used in the second layer 16, 16' is a composition that provides a higher electrical conductivity than the first layer, in general. It may also be formulated to provide a lower hysteresis than the second rubber composition, a good resistance to chipping and chunking, and a high tear strength resistance in region 76, where the second layer 16' contacts the road.

The (first) rubber composition in the first layer 14, 14' may include a mixture of elastomers, in which styrene-butadiene rubber (SBR), e.g., solution polymerized styrene-butadiene rubber (SSBR) is the major component (e.g., at least 60 phr, or at least 70 phr, or up to 92 phr). The (second) rubber composition in the second layer 16, 16' may include one or more elastomers, in which isoprene rubber, e.g., natural rubber, or synthetic polyisoprene, is the major or only component (e.g., at least 70 phr, or at least 80 phr, or up to 100phr). The second rubber composition may include a higher phr of carbon black and a lower phr of resin than the first rubber composition.

### Composition of The First Tread layer

The first tread layer 14, 14' may be formed from a vulcanizable rubber composition including at least 70 phr of an SBR, such as a solution polymerized styrene-butadiene rubber (SSBR), at least 8 phr of a second elastomer selected from a polybutadiene rubber (PBD), a natural rubber or synthetic polyisoprene, and mixtures thereof, at least 50 phr of silica, at least 2 phr of an organosilane coupling agent, a processing oil, such as a low polycyclic aromatic (PCA) mineral or naphthenic oil or vegetable oil, at least 1 phr of a wax, at least 10 phr of a resin, 0-25 phr of carbon black, optionally one or more of an antioxidant and an antiozonant, and a cure package including a cure activator, such as zinc oxide and a fatty acid, a sulfur-based cure agent, a cure accelerator, and optionally a cure retardant.

### Elastomers

In one specific embodiment, the first tread layer 14, 14' includes two (or more) SBRs. For example, the first rubber composition may include 30 to 70 phr of a first SSBR and 30 to 70 phr of a second SSBR. For example, the first SSBR may have a bound styrene content of from 30 to 50 wt. %, a vinyl 1,2 content of from 10 to 40 wt. %, based on the rubber weight, and a Tg of -40° C to -20° C and the second SSBR may have a bound styrene content of from 25 to 45 wt. %, a vinyl 1,2 content of from 20 to 60 wt. %, based on the rubber weight, and a Tg of from -30° C to -5° C. The first and second SSBRs may have a difference in Tg of 10°C to 20° C. At least one of the first and second SSBRs may have an Mw of greater than 1,000,000.

As the first styrene-butadiene rubber, suitable SSBRs may be formed, for example, by organo lithium catalyzation of styrene and butadiene monomers in the presence of an organic hydrocarbon solvent. The polymerizations employed in making the rubbery polymers are typically initiated by adding an organolithium initiator to an organic polymerization medium that contains the monomers. Such polymerizations are typically carried out utilizing continuous polymerization techniques. In such continuous polymerizations, monomers and initiator are continuously added to the organic polymerization medium with the rubbery polymer synthesized being continuously withdrawn. Such continuous polymerizations are typically conducted in a multiple reactor system. Suitable polymerization methods are described, for example in U.S. Pat. Nos. 4,843,120A; 5,137,998A; 5,047,483A; 5,272,220A; 5,239,009A; 5,061,765A; 5,405,927A; 5,654,384A; 5,620,939A; 5,627,237A; 5,677,402A; 6,103,842A; and 6,559,240B2.

Suitable first SSBRs are available commercially, such as SPRINTAN^{™} SLR 6430, from Synthos Group. SPRINTAN^{™} SLR 6430 SSBR is partially Si-coupled, and manufactured by anionic polymerization using an organo-lithium initiator. It is extended with 37.5 parts of treated distillate aromatic extracts (TDAE) oil per 100 parts of the SSBR. It contains a non-staining stabilizer and possesses a high styrene/medium vinyl microstructure with Tg of -36°C.

The second SSBR may be made, for example, using the methods described above for the first SSBR.

As the second SSBR, suitable solution polymerized styrene-butadiene rubbers are available commercially, such as Tufdene^{™} E680 SSBR from Asahi Chemical, SLF30H41-66C from The Goodyear Tire & Rubber Company, and F3438 from LG Chem. Such solution polymerized styrene-butadiene rubber may be tin- or silicon-coupled. In one embodiment, a suitable SSBR may be at least partially silicon-coupled. Tufdene^{™} E680 SSBR, for example, is extended with 37.5 parts of treated distillate aromatic extracts (TDAE) oil per 100 parts of the SSBR.

In another embodiment, the first vulcanizable rubber composition may include an SSBR which may have a glass transition temperature (Tg) of from -85° C to -50° C, a second elastomer selected from a natural rubber / synthetic polyisoprene and a cis-1,4 polybutadiene, which may have a Tg of from -110° C to -90° C. In this embodiment, the first layer may include only a single SSBR, which may be selected from those listed above, or a different SSBR. One suitable SSBR a partially-coupled, SSBR manufactured by anionic polymerization using an organo-lithium initiator. A non-staining stabilizer may be added during the production. The SSBR may include functionalization for improved polymer/filler interaction with carbon black and silica. One such SSBR is commercially available from Synthos Group as SPRINTAN^{™} 3402. It has a low styrene/medium vinyl microstructure with a Tg of -62°C.

Where natural rubber or synthetic polyisoprene is used as one of the elastomers in the first rubber composition, it may be present in the first rubber composition at 8 phr or more, such as at least 10 phr, or at least 12 phr, or at least 15 phr, or at least 18 phr, or up to 30 phr, or up to 25 phr, or up to 22 phr.

As used herein, the term "natural rubber" means naturally-occurring rubber, such as can be harvested from sources such as Hevea rubber trees and non-Hevea sources (e.g., guayule shrubs and dandelions such as TKS). In other words, the term "natural rubber" should be construed so as to exclude synthetic polyisoprene. Natural rubber produced from field grade coagulum (cuplump) from the Hevea brasiliensis tree is a common form of natural rubber. For example, technically specified or block rubber (TSR), is a natural rubber available from Indonesia, where it may be referred to as Standard Indonesian Rubber (SIR), Malaysia (SMR), and Thailand (STR). It can be obtained in a number of grades, including TSR 10 and TSR 20, with the TSR 10 grade being of higher purity.

In some embodiments, the natural rubber may include or consist of a modified natural rubber, such as a deproteinized natural rubber (DPNR), epoxidized natural rubber (ENR), hydrogenated natural rubber (HNR), grafted natural rubber, or mixture thereof.

Where polybutadiene (PBD) is used as one of the elastomers in the first rubber composition, it may be present in the first vulcanizable rubber composition at 8 phr or more, such as at least 10 phr, or at least 12 phr, at least 18 phr, or up to 30 phr, or up to 20 phr, or up to 15 phr.

PBDs may be prepared, for example, by organic solution polymerization of 1,3-butadiene. The PBD may have at least a 90 percent cis-1,4-content and a glass transition temperature Tg of from -110 to -90° C. Suitable polybutadiene rubbers are available commercially, such as Budene^{®} 1207, Budene^{®} 1208, Budene^{®} 1223, and Budene^{®} 1280 from The Goodyear Tire & Rubber Company. For example, cis-1,4-polybutadiene rubber obtained as Budene^{®} 1207 has a cis-1,4-content of at least 96 wt. %, a Mooney viscosity of 55, and a Tg of less than -100 °C. Budene^{®} 1208 polybutadiene rubber has a cis-1,4-polybutadiene content of at least 97 wt. %, a Mooney viscosity of 46, and a Tg of less than -100 °C. Such commercial elastomers may incorporate a minor amount of a non-staining antioxidant.

### Silica

The first rubber composition may include at least 50 phr, or at least 90 phr, or at least 100 phr, or up to 160 phr, or up to 150 phr, or up to 140 phr of silica. The silica used in the first rubber composition may include pyrogenic and/or precipitated silica. The silica may be amorphous (e.g., precipitated) silica and/or crystalline silica. The term "silica" is used herein to refer to silicon dioxide, SiO₂ (which may contain minor amounts of impurities, generally less than 1 wt. %, resulting from the process in which the silica is formed). The term "precipitated silica" is used to refer to synthetic amorphous silica, typically obtained by a process in which a silicate is precipitated with an acidifying agent.

The silica may be prepared by various methods. Precipitated silica may be prepared by digesting amorphous silica, e.g., found in rice husks or other biological wastes, with sodium hydroxide to form sodium silicate and then precipitating silica from the sodium silicate by reaction with an acidifying agent, such as sulfuric acid or carbon dioxide. The resulting silica precipitate is washed and filtered. Methods for the preparation of precipitated silica are disclosed, for example, in U.S. Pat. Nos. 5,587,416A, 5,800,608A, 5,882,617A, and 9,359,215B2, and U.S. Pub. Nos. 20020081247A1 and 20050032965A1. Precipitated silica may also be formed from silica gel as described, for example, in U.S. Pat. Nos. 5,708,069, and 5,789,514. Silica gels may be derived, for example, by hydrophobizing a silica hydrogel with, for example, an organomercaptosilane and alkyl silane and drying the product.

The surface area of silica can be measured in various ways. One method is through nitrogen adsorption in accordance with ASTM D1993-18, "Standard Test Method for Precipitated Silica-Surface Area by Multipoint BET Nitrogen Adsorption," which is referred to herein as the nitrogen surface area. Another method is in accordance ASTM D6845-20, "Standard Test Method for Silica, Precipitated, Hydrated - CTAB (Cetyltrimethylammonium Bromide) Surface Area," which is referred to herein as the CTAB surface area. The CTAB molecule is relatively large, so it is not adsorbed in micropores or on surface roughness. Thus, the CTAB surface area reflects only the surface of the silica that is available for interaction with rubber molecules.

In an exemplary embodiment, the silica has a CTAB surface area of at least 120 m²/g, or at least 140 m²/g, or up to 350 m²/g, or up to 300 m²/g.

The silica may also be characterized by having a dibutyl phthalate (DBP) absorption value of 100 to 400, alternatively 150 to 300.

Examples of such precipitated silicas include Hi-Sil^{™} 532, Hi-Sil^{™} 532 EP, and Hi-Sil^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, Premium SW, and 195HR from Solvay; Ultrasil^{™}, under the designations VN2, VN3, VN3GR, 5000GR, 6000GR, 7000GR, 9000GR from Evonik; ZeopoFM, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd.

For example, a precipitated amorphous silica having a BET nitrogen surface area of 165 m²/g and a CTAB surface area of 160 m²/g, obtained as Zeosil^{™} 1165 MP from Solvay, may be used.

The silica may have been surface treated, e.g., with a coupling agent and/or a polyalkylene oxide, such as polyethylene glycol, prior to incorporating the pretreated silica into the rubber composition to enhance dispersion and/or adherence to the elastomers. In another embodiment, the silica may be treated with the coupling agent and/or polyalkylene oxide in situ, within the rubber composition, e.g., prior to addition of the curing agent(s). Exemplary coupling agents are described below.

### Carbon Black

Carbon black may serve as a colorant and/or a reinforcing filler in the first rubber composition and may be present at from 0-25 phr. In one embodiment, the first rubber composition is free or substantially free (e.g., less than 2phr or less than 1 phr) of carbon black. In another embodiment, the first rubber composition includes at least 5 phr, or up to 10 phr, or up to 8 phr of carbon black. In another embodiment, the first rubber composition includes at least 10 phr, or at least 15 phr, or up to 25 phr of carbon black.

Suitable carbon blacks used in the first rubber composition may include those with ASTM designations N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. Suitable carbon blacks have an iodine absorption of from 9 to 220 g/kg and a DBP oil absorption number of from 34 to 150 cm³/100 g. In one embodiment, the carbon black has an iodine absorption of from 130 to 210 g/kg, as determined according to ASTM-D1510, and a DBP oil absorption number ranging from 110 to 140 cc/100 g, as determined according to ASTM D-2414.

Other suitable carbon blacks having a very fine particle size are available in the Propel^{®} X range by Cabot. These include Propel^{®} X14, Propel^{®} X20, Propel^{®} X22, Propel^{®} X25, Propel^{®} X35, and Propel^{®} X39. For example, Propel^{®} X22 carbon black is a furnace black with a high surface area, high stiffness, and improved abrasion resistance. The surface area is significantly higher than standard ASTM N200 and N100 carbon black products.

The first vulcanizable rubber composition may optionally include from 1 to 20 phr of other fillers, such as ultra-high molecular weight polyethylene (UHMWPE) particulate polymer gels as disclosed, for example in U.S. Pat. Nos. 6,242,534; 6,207,757; 6,133,364; 6,372,857; 5,395,891; and 6,127,488, plasticized starch composite filler as disclosed, for example, in U.S. Pat. No. 5,672,639, aluminum hydroxide, and the like.

### Organosilane Coupling Agent

The first vulcanizable rubber composition may contain an organosilane coupling agent. The amount of the organosilane coupling agent in the first rubber composition may vary, depending on the level of other additives that are used. For example, a ratio of organosilane coupling agent to silica, by weight, is at least 0.5:100, or at least 1: 100, or at least 2: 100, or up to 10:100.

The first rubber composition may include at least 2 phr, or at least 5 phr, or up to 40 phr, or up to 20 phr, or up to 15 phr, or up to 10 phr of the organosilane coupling agent(s).

The organosilane coupling agent may include one or more sulfur-containing organosilane compounds. Examples of suitable sulfur-containing organosilane compounds are of the formula:
Z-Alk-Sₓ-Alk-Z, in which each Z is independently selected from the group consisting of: 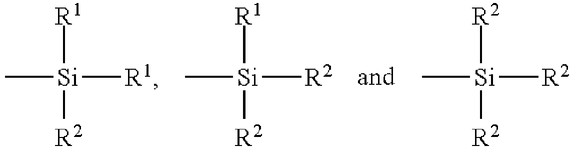 where each R¹ is selected from the group consisting of an alkyl group of 1 to 4 carbon atoms, a cyclohexyl group, and a phenyl group; each R² is selected from the group consisting of an alkoxy group of 1 to 8 carbon atoms, and a cycloalkoxy group of 5 to 8 carbon atoms; Alk is a divalent hydrocarbon of 1 to 18 carbon atoms; and x is an integer of from 2 to 8 indicating the average number of sulfur atoms forming a chain.

In one embodiment, the sulfur-containing organosilane coupling agent is a 3,3'-bis-(trialkoxysilylalkyl)polysulfide, which may be selected from 3,3'-bis-(triethoxysilylpropyl)disulfide and 3,3'-bis(triethoxysilylpropyl)tetrasulfide.

Other suitable sulfur-containing organosilane coupling agents include compounds disclosed in U.S. Pat. No. 6,608,125. These sulfur containing organosilane compounds are of the formula G-C(==O)-S-CH₂CH₂CH₂SiX₃, where each X is an independently-selected RO- group, each R is independently selected from the group consisting of hydrogen, alkyl groups, alkenyl groups, aryl groups, and aralkyl groups, such moieties other than hydrogen having from 1 to 18 carbon atoms, and G is a monovalent alkyl of from 6 to 8 carbon atoms. In one embodiment, the sulfur containing organosilane compound includes 3-(octanoylthio)-1-propyltriethoxysilane, of formula CH₃(CH₂)₆C(=O)-S-CH₂CH₂CH₂Si(OCH₂CH₃)₃, which is available commercially as NXT^{™} from GE Silicones.

In another embodiment, suitable sulfur containing organosilane compounds include those disclosed in U.S. Patent Publication 2003/0130535. These sulfur containing organosilane compounds are of the formulas II or III: 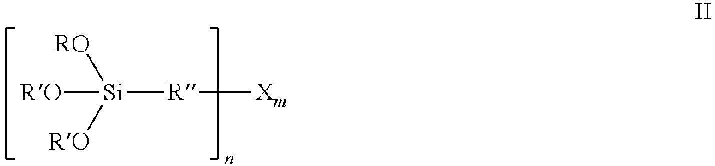 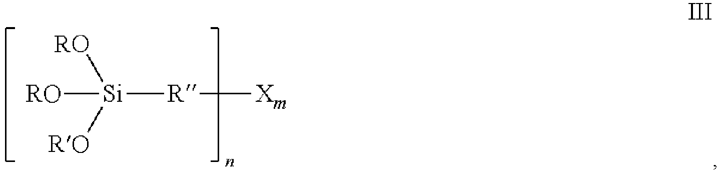 where: R is a methyl or ethyl group; each R' is identical or different and is selected from C₉ - C₃₀ branched and unbranched monovalent alkyl and alkenyl groups, aryl groups, aralkyl groups, branched and unbranched C₂ - C₃₀ alkylether groups, branched and unbranched C₂-C_{30 -}alkyl polyether groups, and R‴₃Si, where R‴ is C₁-C₃₀ branched or unbranched alkyl or alkenyl group, aralkyl group, or aryl group, R" is a branched or unbranched, saturated or unsaturated, aliphatic, aromatic or mixed aliphatic/aromatic divalent C₁-C₃₀ hydrocarbon group. X is SH where n=1 and m=1, S where n=2 and m=1-10 and mixtures thereof, S(C==O)-R‴ where n=1 and m=1 or H where n=1 and m=1.
R" may be, for example, CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ or

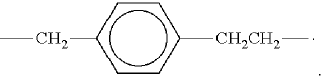

In one embodiment, the sulfur containing organosilane compound is of formula II, where R is ethyl, R' is C₁₂-C₁₄ alkyl, R" is CH₂CH₂CH₂, X is SH, n is 1 and m is 1. In one embodiment, the sulfur containing organosilane compound includes Si-363 from Degussa.

In another embodiment, the sulfur containing organosilane compound is a combination of 3,3'-bis(triethoxypropylsilyl)tetrasulfide and 3-(octanoylthio)-1-propyltriethoxysilane.

### Processing Oil

The processing oil(s) may be present in the rubber composition at 2 phr, or higher, such as up to 70 phr, or up to 60 phr, or up to 50 phr.

The processing oil may be selected from mineral oils, vegetable oils, naphthenic oils, and the like.

The processing oil may be included in the rubber composition as an extending oil, typically used to extend elastomers, such as in the case of SPRINTAN^{™} SLR 6430 SSBR and Tufdene^{™} E680 SSBR. Processing oil may also or alternatively be included in the rubber composition by addition of the oil directly during rubber compounding. The processing oil used may include both extending oil present in the elastomers, and process oil added during compounding. In one embodiment, the rubber composition includes a low PCA oil. Suitable low PCA oils include mild extraction solvates (MES), treated distillate aromatic extracts (TDAE), special residual aromatic extract (RAE), special residual aromatic extract (SRAE), and heavy naphthenic oils; see for example U.S. Pat. Nos. 5,504,135A; 6,103,808A; 6,146,520A; 6,248,929B1; 6,399,697B1; U.S. Pub. Nos 2002/0000280A1; 2001/0023307A1; 2002/0045697A1; 2001/0007049A1; EP0839891B1; JP2002097369A; and ES2122917A1.

Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

Suitable vegetable oils include soybean and sunflower oils.

In combination, the processing oil and resin may be at least 25 phr, or at least 30 phr, or at least 40 phr, or up to 120 phr, or up to 100 phr, or up to 90 phr, or up to 70 phr.

### Wax

The first rubber composition may include at least 1 phr, or at least 2 phr, or up to 5 phr of a wax.

Suitable waxes, which may also serve as antiozonants, include microcrystalline waxes, which may be of the type shown in The Vanderbilt Rubber Handbook (1978), Pages 346 and 347. One example wax is Negozone^{™} 3457, which is available from Hansen & Rosenthal KG.

### Resin

The first rubber composition may include at least at 10 phr, or at least 15 phr, or at least 20 phr, or up to 70 phr, or up to 60 phr, or up to 35 phr, or up to 30 phr of a resin.

Exemplary resins include hydrocarbon resins, which may be derived from oil, synthesized, or derived from plants, such as pine tree resins.

Example hydrocarbon resins include aromatic, aliphatic, and cycloaliphatic resins. The hydrocarbon resins may have a Tg of at least 30°C, or up to 50°C. The hydrocarbon resin may have a softening point of at least 70°C, or up to 100°C.

Examples of aliphatic hydrocarbon resins include C5 fraction homopolymer and copolymer resins. Examples of cycloaliphatic hydrocarbon resins include cyclopentadiene ("CPD") homopolymer and copolymer resins, dicyclopentadiene ("DCPD") homopolymer and copolymer resins, and combinations thereof. Examples of aromatic hydrocarbon resins include aromatic homopolymer and copolymer resins.

An aromatic copolymer resin refers to a hydrocarbon resin which includes a combination of one or more aromatic monomers in combination with one or more other (non-aromatic) monomers, with the majority by weight of all monomers generally being aromatic.

Specific examples of aromatic resins include coumarone-indene resins, alkyl-phenol resins, and vinyl aromatic homopolymer and copolymer resins. Examples of alkyl-phenol resins include alkylphenol-acetylene resins such as p-tert-butylphenol-acetylene resins, alkylphenol-formaldehyde resins (such as those having a low degree of polymerization). Vinyl aromatic resins may include one or more of the following monomers: alpha methyl styrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinylnaphthalene and the like. Examples of vinylaromatic copolymer resins include vinylaromatic/terpene copolymer resins (e.g., limonene/styrene copolymer resins), vinylaromatic/C5 fraction resins (e.g., C5 fraction/styrene copolymer resin), vinylaromatic/aliphatic copolymer resins (e.g., CPD/styrene copolymer resin, and DCPD/styrene copolymer resin).

Other aromatic hydrocarbon resins include terpene resins, such as alpha-pinene resins, beta-pinene resins, limonene resins (e.g., L-limonene, D-limonene, dipentene which is a racemic mixture of Land D-isomers), beta-phellandrene, delta-3-carene, delta-2-carene, and combinations thereof.

In one embodiment, the hydrocarbon resin includes a combination of aromatic and aliphatic/cycloaliphatic hydrocarbons. In such cases, the total amount of any aliphatic and/or cycloaliphatic resin used in combination with the aromatic resin may be no more than 5 phr, or less than 4 phr, or less than 3 phr, or more than 20% by weight, or no more than 15% or no more than 10% by weight of the overall amount of hydrocarbon resins.

One example resin is a styrene-butadiene copolymer having an Mn of from 1,000 to 15,000; a styrene content of from 17 to 27 wt. %, and a vinyl content of 60 to 80 wt. %. Such a styrene-butadiene copolymer is available commercially as Ricon^{™} 100 from Sartomer.

Another example hydrocarbon resin is a DCPD/C9-based hydrogenated alicyclic hydrocarbon resin. The resin may have a softening point of 90.0 - 110°C, an Mn of 420-480, and an Mw of 680-750. Such a resin is available as T-REZ^{™} PR803 from ENEOS.

Another example hydrocarbon resin is an alpha methyl styrene resin derived from styrene and alpha-methyl-styrene. The presence of the styrene/alpha methyl styrene with a rubber blend which contains a styrene-butadiene elastomer tends to be beneficial because of observed viscoelastic properties of the tread rubber composition such as the storage modulus G' and tan Δ, at different temperature/frequency/strain conditions. The molecular weight distribution of the alpha methyl styrene resin (ratio of Mw to Mn) may be from 1.5:1 to 2.5:1. This is believed to be advantageous because of the selective compatibility with the polymer matrix and because of a contemplated use of the tire in wet and dry conditions over a wide temperature range.

The glass transition temperature Tg of the styrene/alpha methyl styrene copolymer may be 20° C to 100° C, e.g., 30° C to 80° C.

An exemplary styrene/alpha methyl styrene resin is a relatively short chain copolymer of styrene and alpha methyl styrene with a styrene/alpha methyl styrene molar ratio of 0.40 to 1.50. In one aspect, such a resin can be suitably prepared, for example, by cationic copolymerization of styrene and alpha methyl styrene in a hydrocarbon solvent.

In one embodiment, the styrene/alpha methyl styrene resin is composed of 40 to 70 percent units derived from styrene and, correspondingly, 60 to 30 percent units derived from alpha methyl styrene. In one embodiment, the styrene/alpha methyl styrene resin has a softening point of 80° C to 145° C.

One suitable alpha methyl styrene resin is available commercially as Sylvatraxx^{™} 4401 from Kraton, having a softening point of 85 °C, and a Tg of 39°C.

One suitable styrene/alpha methyl styrene resin is available commercially as Eastman^{™} Resin 2336 from Eastman Chemical Co. with a Tg of 38° C.

Other suitable resins include dimerized gum rosins. The dimerized gum rosin may predominantly include dimers of rosin acids with some monomeric rosin acids. Suitable dimerized gum rosin is available commercially as Dymerex^{™} polymerized rosin from Eastman Chemical Co, reportedly having a number average molecular weight Mₙ of 412 and a weight average molecular weight M_{w} of 487.

In one embodiment, the resin present in the first rubber composition may be selected from (i) a styrene-butadiene copolymer having a number average molecular weight (Mn) ranging from 1,000 to 15,000; a styrene content of from 17 to 27 percent by weight, and a vinyl content of 60 to 80 percent by weight, (ii) a dimerized gum rosin; (iii) a styrene/alpha methyl styrene resin, (iv), a DCPD/C9-based hydrogenated alicyclic hydrocarbon resin, and mixtures thereof.

### Cure Package

The cure package includes a sulfur-based cure (vulcanizing) agent and/or a cure activator (e.g., zinc oxide, stearic acid, and the like), and may further include a cure accelerator, and optionally a cure inhibitor.

Examples of suitable sulfur-based cure agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur-based cure agents may be used in an amount of at least 0.1 phr, or at least 0.5 phr, or up to 10 phr, or up to 8 phr, or up to 5 phr.

Cure accelerators and cure activators act as catalysts for the vulcanization agent. Accelerators are used to control the time and/or temperature required for vulcanization and to improve the properties of the vulcanizate. The amount of the cure accelerator may be at least 0.1 phr, or at least 0.5 phr, or at least 2 phr, or up to 15 phr, or up to 10 phr, or up to 5 phr.

In one embodiment, a single accelerator system may be used, i.e., primary accelerator. A primary accelerator may be used in amounts ranging from 0.5 to 5 phr. In another embodiment, combinations of two or more accelerators may be used. In this embodiment, a primary accelerator is generally used in the larger amount (e.g., 0.5 to 5 phr), and a secondary accelerator is generally used in smaller amounts (e.g., 0.05 to 0.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone.

In addition, delayed action accelerators may be used which are less affected by normal processing temperatures but produce satisfactory cures at ordinary vulcanization temperatures.

Representative examples of accelerators include amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound, although a second sulfenamide accelerator may be used.

Examples of such accelerators include thiazole cure accelerators, such as 2-mercaptobenzothiazole, 2,2'-dithiobis(benzothiazole) (MBTS), N-cyclohexyl-2-benzothiazolesulfenamide (CBS), and N-tert-butyl-2-benzothiazole-sulfenamide (TBBS), guanidine cure accelerators, such as diphenyl guanidine (DPG), and mixtures thereof.

Some accelerators are known as ultra accelerators. These include 1,6-bis-N,N(dibenzylthiocarbamoyldithio)hexane (BDBZTH), which is a fast-acting accelerator and also acts as a crosslinking agent.

Cure activators are additives used to support vulcanization. Generally, cure activators include both an inorganic and organic component. Zinc oxide is the most widely used inorganic cure activator. Organic cure activators include fatty acids, such as stearic acid, palmitic acid, lauric acid, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

The amount of the inorganic cure activator may be at least 0.1 phr, or at least 0.5 phr, or up to 8 phr, or up to 5 phr, or up to 4 phr.

The amount of the organic cure activator may be at least 0.1 phr, or at least 1 phr, or up to 10 phr, or up to 5 phr, or up to 4 phr.
Cure retardants (cure inhibitors) may be used to control the vulcanization process and generally retard or inhibit vulcanization until the desired time and/or temperature is reached. Example vulcanization inhibitors include cyclohexylthiophthalimide.

The amount of cure inhibitor, where used, may be 0.1 to 3 phr, or 0.5 to 2 phr.

The first rubber composition may further include other components, in addition to those exemplified above, such as antioxidants, antiozonants, peptizing agents, and the like. Representative antioxidants may be, for example, diphenyl-p-phenylenediamine and others, such as, for example, those disclosed in The Vanderbilt Rubber Handbook (1978), pages 344 through 346. Typical amounts of antiozonants, where used, may be from 1 to 5 phr. Typical amounts of peptizers, where used, may be from 0.1 to 1 phr. Example peptizers include pentachlorothiophenol and dibenzamidodiphenyl disulfide. The first rubber composition may include other processing aids. For example, a lubricant and processing aid, such as STRUKTOL^{®} EF 44 by Struktol may be used. It is a blend of fatty acid derivates (mainly zinc soaps), and may be used in an amount of at least 1 phr, or up to 5 phr, or up to 3 phr.

### Composition of the Second Layer

The second layer 16, 16' is formulated to provide good electrical conductivity and tear resistance. The second layer may be formed from a second vulcanizable rubber composition including at least 70 phr of natural rubber and optionally one or more additional elastomers. The second rubber composition may include at least 20 phr of carbon black, at least 5 phr of silica, optionally, at least 1 phr of an organosilane coupling agent, a processing oil, such as a naphthenic oil and/or a vegetable oil, at least 0.5 phr, of a wax, optionally one or more of an antioxidant and an antiozonant, and a cure package including a sulfur-based cure agent, a cure activator such as zinc oxide and a fatty acid, a cure accelerator, and optionally a cure retardant.

### The Elastomers

The second rubber composition includes at least 70 phr, or at least 80 phr, or at least 90 phr, or up to 100 phr of polyisoprene rubber, such as natural rubber and/or synthetic polyisoprene, such as cis 1,4-polyisoprene with a cis 1,4 content of at least 95 wt. %. The natural rubber/synthetic polyisoprene may be as described above for the first rubber composition.

Where the second rubber composition includes elastomers other than natural rubber and/or synthetic polyisoprene, these may be synthetic polymers such as homopolymerization products of butadiene and its homologs and derivatives, for example, methylbutadiene, dimethylbutadiene and pentadiene, copolymers such as those formed from butadiene or its homologs or derivatives with other unsaturated monomers. Among the latter may be acetylenes, for example, vinyl acetylene, olefins, for example, isobutylene, which copolymerizes with isoprene to form butyl rubber, vinyl compounds, for example, acrylic acid, acrylonitrile (which polymerize with butadiene to form nitrile butadiene rubber, NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinyl ethyl ether. Specific examples of synthetic rubbers include neoprene (polychloroprene), polybutadiene (including cis 1,4-polybutadiene, butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers.

As an example, one optional elastomer in the second rubber composition is a cis-1,4 polybutadiene, which may be present in an amount of at least 5 phr, or up to 20 phr, or up to 10 phr. Suitable polybutadiene rubbers may be prepared, for example, by organic solution polymerization of 1,3-butadiene. The PBD may have at least a 90 % cis 1,4-content and a glass transition temperature Tg of from -95 to -105° C. Suitable polybutadiene rubbers are available commercially, such as Budene^{®} 1207 from Goodyear, and the like.

### Carbon Black

The second rubber composition may include a higher phr of carbon black than the first rubber composition, e.g., at least 25 phr, or at least 30 phr, or at least 35 phr, or up to 60 phr, or up to 50 phr of carbon black. A ratio of the phr of carbon black in the second rubber composition to the phr of carbon black in the first rubber composition may be at least 1.1:1, or at least 1.2:1, or at least 1:5:1, or at least 1:8:1, or up to 50:1. The carbon black may be selected from those exemplified for the first rubber composition. For example, ASTM N121 grade carbon black may be used, which has an iodine adsorption of 121 ± 5 g/kg, as determined by ASTM D1510, an oil absorption number (OAN) of 132 ± 5 cm³//100g, according to D2414, an external surface area (STSA) of 114 ± 5 m²/g, according to D6556, and an oil absorption number of compressed sample of 111 ± 5 cm³/100g, according to D3493.

A ratio of carbon black to silica, by weight, in the second rubber composition may be at least 1.5:1, or at least 2:1, or up to 4:1.

### Silica

The second rubber composition may include at least 5 phr, or at least 10 phr, or at least 12 phr, or up to 30 phr, or up to 20 phr, or up to 18 phr of silica. The silica may be selected from those described above for the first rubber composition.

As an example, a precipitated silica having a BET nitrogen surface area of 165 m²/g and a CTAB surface area of 160 m²/g, which may be obtained from Solvay as Zeosil^{™} 1165, may be used.

### Organosilane Coupling Agent

The second rubber composition optionally includes at least 1 phr, or at least 2 phr, or up to 10 phr, or up to 8 phr of an organosilane coupling agent.

The organosilane coupling agent may be selected from those described above for the first rubber composition.

One example organosilane coupling agent is bis-[3-(triethoxysilyl)propyl] Tetrasulfide (TESPT), which may be supported on carbon black, such as N330 grade, which is available as Si-69^{™} from Stobec.

### Processing Oil

The second rubber composition may include at least 0.5 phr, or at least 1 phr, or up to 10 phr, or up to 5 phr of processing oil.

The processing oil may be selected from those described above for the first rubber composition, e.g., include one or more of a naphthenic oil, a mineral oil, and a vegetable oil.

### Wax

The second rubber composition may include at least 0.5 phr, or at least 1 phr, or up to 5 phr of one or more waxes, which may serve as a processing aid and/or an antiozonant. The wax(es) may be selected from those described above for the first rubber composition, e., a mixture of paraffin waxes.

### Antiozonants and Antioxidants

The second rubber composition may include one or more of an antioxidant and an antiozonant, as described for the first rubber composition, e.g., in a total amount of at least 0.5 phr, or at least 1 phr, or at least 2 phr, or up to 5 phr, or up to 3 phr, such as a mixture of diaryl-p-phenylene diamines (DTPD) and/or N-(1,3-dimethylbutyl)-N'-phenyl-p-phenylenediamine (6PPD).

### Cure Package

The second rubber composition includes a cure package including a sulfur-based cure agent, a cure activator including zinc oxide and a fatty acid, a cure accelerator, and optionally a cure retardant. Examples of these components include those described for the first rubber composition.

For example, the second rubber composition includes at least 0.1 phr, or at least 0.5 phr, or up to 5 phr, or up to 2 phr, or up to 1 phr of a sulfur-based cure agent, such as elemental sulfur; at least 1 phr, or at least 2 phr, or up to 10 phr, or up to 7 phr, or up to 5 phr of zinc oxide or salt thereof; at least 1 phr, or at least 2 phr, or at least 3 phr, or up to 10 phr, or up to 7 phr, or up to 5 phr of a mixture of fatty acids, predominantly stearic acid; and at least 0.5 phr, or at least 1 phr, or up to 5 phr, or up to 2 phr of a cure accelerator, such as n-tert-butyl-benzothiazolesulfenamide (TBBS).

The second composition may be free or substantially free of resin (e.g., no more than 5 phr, or no more than 2 phr, or no more than 1 phr).

Example rubber compositions are shown in Tables 1 and 2.

**TABLE 1: Examples of the First Rubber Composition**

| Ingredient | Example A, phr | Example B, phr | Example C, phr |
|---|---|---|---|
| SSBR | 70-92 | 75-90 | 85-92 |
| Natural rubber (and/or synthetic polyisoprene) | 0-30 | 10-25 | 0-2, e.g., 0 |
| Polybutadiene | 0-30 | 0-2, e.g., 0 | 8-15 |
| Silica | 50-160 | 100-150 | 90-120 |
| Carbon Black | 0-25 | 0-10 | 15-25, e.g., 15-22 |
| Organosilane coupling agent | 2-20 | 5-20 | 5-15 |
| Wax(es) | 1-5 | 1-4 | 1-4 |
| Oils | 2-70 | 4-10 | 5-60 |
| Resin(s) | 10-70 | 20-60 (e.g., DCPD/C9-based tackifier resin) | 10-30 (e.g., AMS resin and modified rosin) |
| Antioxidants and antiozonants | 1-10 | 1-10 | 1-10 |
| Fatty Acids | 1-10 | 2-5 | 1-5 |
| Zinc Oxide | 0.5-5 | 0.5-4 | 0.5-4 |
| Sulfur | 0.5-3 | 0.5-2 | 0.5-3 |
| Accelerator(s) | 0.5-12 | 2-10 | 2-10 |
| Total phr | 170-420 | 240-385 | 231-385 |

For example, Example B may include an SSBR as described in US Pub. No. 2021/0032442 A1. The SSBR may have a Tg of -85° C to -50° C. The hydrocarbon resin may have a Tg of at least 30° C. In one embodiment, this rubber composition is used for the layer 14' of the L-shaped design of FIGURE 3.

Example C, for example, may include first and second SSBRs, as described in US Pub. No. 2012/0138203A1, such as first SSBR with a bound styrene content of from 30 to 50 wt.%, a vinyl 1,2 content of from 10 to 40 wt. %, and a Tg of from -40° C to -20° C, and a second SSBR with a bound styrene content of from 25 to 45 wt. %, a vinyl 1,2 content of from 20 to 60 wt. %, based on the rubber weight, and a Tg of -30° C to -5° C, a processing oil, such as a low PCA oil having a polycyclic aromatic content of less than 3 percent by weight as determined by the IP346 method, and a resin, the total amount of oil and resin being at least 55 phr, and carbon black and silica in a combined amount of at least 115 phr. At least one of the first and second SSBRs may have an Mw of greater than 1,000,000. The first and second SSBRs may have a difference in Tg of from 10 to 20° C. A weight ratio of silica to carbon black may be at least 4:1. In one embodiment, this rubber composition is used for layer 14 of the chimney design of FIGURE 2.

**TABLE 2: Examples of the Second Rubber Composition**

| Ingredient | Example D, phr | Example E, phr |
|---|---|---|
| Polyisoprene, e. g., natural rubber | 80-100 | 90-100 |
| Other elastomers | 0-20 | 0-10 |
| Silica | 5-25 | 10-20 |
| Carbon Black | 25-60 | 30-50 |
| Organosilane coupling agent | 1-10 | 1-5 |
| Wax(es) | 0.5-5 | 1-4 |
| Oil(s) | 1-10 | 1-5 |
| Antioxidants and antiozonants | 1-10 | 1-5 |
| Fatty Acids | 1-10 | 2-6 |
| Zinc Oxide | 0.5-5 | 1-4 |
| Sulfur | 0.5-3 | 0.5-2 |
| Accelerator(s) | 0.5-12 | 2-10 |

The pneumatic tire with the two-layer tread described herein may be a race tire, such as a racing truck tire, passenger tire, aircraft tire, agricultural, earthmover, off-the-road, or road truck tire.

### Preparing the Rubber Compositions

The particular steps involved in preparing the first and rubber compositions of tread may include mixing the ingredients in at least one non-productive master-batch stage and a final productive mixing stage. Mixing may be performed, for example, by kneading the ingredients together in a Banbury mixer or on a milled roll. The term non-productive master-batch stage refers to a mixing stage (or stages) where no vulcanizing agents or vulcanization accelerators are added. The term final productive mixing stage refers to the mixing stage where the vulcanizing agents and vulcanization accelerators are added into the rubber composition.

The non-productive master batch mixing stages may be conducted at a temperature of from 130°C to 200°C. Once the cure package is added, the final master batch mixing stage may be carried out a temperature and time selected to avoid unwanted pre-cure of the rubber composition, e.g., no more than 120°C, such as 40°C to 120°C, or 60°C to 110°C for up to 3 minutes.

The two rubber compositions are then shaped and assembled e.g., in a mold or on a core, together with other components of a tire, and cured to form a tire.

The following examples are presented for the purposes of illustrating the present invention. All parts are parts by weight unless specifically identified otherwise.

### EXAMPLES

### Example 1

A tire is formed with a tire tread configured as shown in FIGURE 3. A Rubber Composition 1 is prepared for the first region 14', using the ingredients shown in TABLE 3. A Rubber Composition 2 is prepared for the second region 16', using the ingredients shown in TABLE 4. In each case, the ingredients used are mixed in a mixer at a suitable temperature (e.g., 140-160°C) in one or more non-productive mixing steps. Following addition of the curing agent, the temperature /mixing time of the mixture in a productive mixing step or steps, is maintained below that at which appreciable curing is likely to take place.

**TABLE 3: Rubber Composition 1**

| Ingredient | Phr |
|---|---|
| SSBR polymer¹ | 80 |
| Natural rubber | 20 |
| Silica² | 135 |
| Processing oil³ | 4 |
| processing aid | 2 |
| Wax | 2.25 |
| organosilane coupling agent⁴ | 13.5 |
| organosilane coupling agent⁵ | 1 |
| Carbon black support for organosilane coupling agent⁵ | 1 |
| Antioxidants and antiozonant | 5.55 |
| Organic Activator | 2.5 |
| Resin⁶ | 57 |
| Accelerators | 4.3 |
| Ultra-accelerator/crosslinking agent | 2.2 |
| Zinc oxide | 1.1 |
| Sulfur | 1 |

| | |
|---|---|
| ¹ Tin-coupled, solution-styrene butadiene rubber (SSBR), manufactured by anionic polymerization using an organo-lithium initiator, SPRINTAN^{™} 3402 from Synthos Group. ² Ultrasil ^{™}6000 GR from Evonik. ³ Sunflower oil ⁴ 3-(octanoylthio)-1-propyltriethoxysilane, NXT^{™} silane, from GE Silicones. ⁵ Bis-[3-(triethoxysilyl)propyl] Tetrasulfide (TESPT) supported on N330 carbon black, Si-69 (50% carbon black, reported separately). ⁶ Tackifier resin-DCPD/C9-based hydrogenated alicyclic hydrocarbon resin, T-REZ PR803^{™} from ENEOS. | |

**TABLE 4: Rubber Composition 2**

| Ingredient | Phr |
|---|---|
| Natural rubber | 100 |
| Carbon black⁷ | 40 |
| Precipitated silica⁸ | 15 |
| Processing oil ⁹ | 2 |
| Wax ¹ | 1.5 |
| Organosilane coupling agent⁵ | 2 |
| Carbon black support for Organosilane coupling agent⁵ | 2 |
| Antioxidants and Antiozonant | 2.97 |
| Organic Activator | 4 |
| Inorganic activator, Zinc oxide | 3 |
| Accelerator | 1.69 |
| Sulfur | 0.9 |

| | |
|---|---|
| ⁷ ASTM N121 Grade Carbon Black. ⁸ Precipitated silica having a BET nitrogen surface area of 165 m²/g and a CTAB surface area of 160 m²/g obtained from Solvay as Zeosil^{™} 1165. ⁹ Naphthenic oil | |

The rubber compositions 1 and 2 are formed into shaped strips and assembled to form a tire tread of a tire for a racing truck as illustrated in FIGURE 3.

### Example 2

A tire is formed with a tire tread configured as shown in FIGURE 2. A Rubber Composition 3 is prepared for the first region 14, using the ingredients shown in TABLE 5. A Rubber Composition 2 is prepared for the second region 16, using the ingredients shown in TABLE 4, above. In each case, the ingredients used are mixed in a mixer at a suitable temperature (e.g., 140-160°C) in one or more non-productive mixing steps. Following addition of the curing agent, the temperature /mixing time of the mixture in a productive mixing step or steps, is maintained below that at which appreciable curing is likely to take place.

**TABLE 5: Rubber Composition 3**

| Ingredient | Phr |
|---|---|
| Polybutadiene ¹⁰ | 10 |
| Solution-Polymerized Styrene-Butadiene Rubber ¹¹ | 50 |
| Solution-Polymerized Styrene-Butadiene Rubber ¹² | 40 |
| Mineral oil as extender for SSBRs ¹³ | 34 |
| Precipitated silica⁸ | 105 |
| Carbon black ¹⁴ | 20 |
| Additional Mineral oil ¹⁵ | 15 |
| Fatty acid mono and diglycerides processing aid | 2 |
| Alpha methyl styrene (AMS) resin ¹⁶ | 15 |
| Processing aid -blend of fatty acid derivates (mainly zinc soaps) | 1 |
| Wax | 1.5 |
| Organosilane coupling agent ¹⁷ | 8 |
| Antioxidants and Antiozonant | 4.5 |
| Organic Activator | 2 |
| Modified rosin¹⁸ | 5 |
| Organic Accelerators | 4.9 |
| Zinc oxide -curing agent and inorganic activator | 2.5 |
| Sulfur | 1.9 |

| | |
|---|---|
| ¹⁰ High cis-1,4 polybutadiene, nickel catalyzed Ni-PBD polymer obtained from The Goodyear Tire Rubber Company. It is stabilized with a non-staining antioxidant. Mooney viscosity (ML(1+4), 100°C ~55, Cis 1,4 content 97%, onset Tg -109. ¹¹ Oil-extended SSBR, Sprintan^{™} 6430, from Synthos Group. It is a partially Si-coupled, SSBR, manufactured by anionic polymerization using an organo-lithium initiator. It is extended with 37.5 parts of a mineral oil: Treated Distillate Aromatic Extract (TDAE oil, reported separately) It contains a non-staining stabilizer. Possesses high styrene/ medium vinyl microstructure with a glass transition temperature of -36°C. ¹² Oil-extended SSBR, Tufdene ^{™} E680 from Asahi Chemical - 34% styrene, 38% vinyl, Tg (OE) = -25°C, extended with 37.5 phr TDAE oil, reported separately. ¹³ TDAE extender oil for SSBRs and additional mineral oil. ¹⁴ Carbon black Propel^{™} X22 from Cabot. ¹⁵ TDAE oil. ¹⁶ Sylvatraxx^{™} 4401 from Kraton, softening point 85 °C, by Ring and Ball method. ¹⁷ Bis-(3-triethoxysilylpropyl)disulfide obtained as JHS-75^{™} from Safic Alcan. ¹⁸ Dymerex^{™} modified acidic rosin, from Eastman Chemical Company. | |

The rubber compositions 2 and 3 are formed into shaped strips for the layers 14, 16 and chimney 58, and assembled to form a tire tread of a tire for a racing truck as illustrated in FIGURE 2.

Measurements on the thickness of the layers 14, 14' and 16, 16' are illustrated in FIGS 2 and 3.

In these examples, the maximum length of Composition 2 touching the road is 87 mm. As will be appreciated, this could be modified, e.g., increased to 120 mm.

Similarly, the thickness of composition 2 could be modified. While the Examples use a maximum thickness of 4 mm, in the region covered by the composition 1 or 3, this could be increased, for example, to 5 mm, or more.

A Control Rubber Composition for the first region uses the ingredients shown in TABLE 6. The control compound and Rubber Composition 2 (second region) are used in single-layer racing truck treads.

**TABLE 6: Control Rubber Composition**

| Ingredient | Phr |
|---|---|
| Natural rubber | 20 |
| Polyisoprene | 10 |
| Solution-Polymerized Styrene-Butadiene Rubber¹⁹ | 70 |
| Carbon black²⁰ | 77 |
| Precipitated silica⁸ | 15 |
| Processing oil¹⁵ | 37 |
| Organosilane coupling agent⁵ | 1.5 |
| Carbon black support for Organosilane coupling agent⁵ | 1.5 |

| | |
|---|---|
| ¹⁹ Tin-coupled, solution-styrene butadiene rubber (SSBR), manufactured by anionic polymerization using an organo-lithium initiator, SPRINTAN^{™} 4601 from Synthos Group. ²⁰ ASTM N220 Grade Carbon Black. | |

Various physical properties of a control compound, commonly used in tire treads, and Compositions 1 and 3, are shown in TABLE 7.

**TABLE 7: Physical Properties of Compositions 2 and 3**

| | Units | Control compound | Composition 1 | Composition 3 |
|---|---|---|---|---|
| RPA - G' uncured | MPa | 0.196 | 0.196 | 0.312 |
| Mooney Viscosity | M.U. | 42.2 | 40.7 | 48.4 |
| Amount MDR 150°C | dNm | 12.2 | 15.3 | 11.2 |
| T25 MDR 150°C | Min | 5.8 | 5.2 | 5.6 |
| T90 MDR 150°C | Min | 15.9 | 12.4 | 13.9 |
| 100% Modulus Ring | MPa | 2.4 | 2.6 | 1.6 |
| 200% Modulus Ring | MPa | 6.2 | 5.6 | 3.6 |
| 300% Modulus Ring | MPa | 10.8 | 10.1 | 6.6 |
| Tensile strength | MPa | 14 | 19.2 | 14 |
| Elongation at break | % | 417 | 568 | 613 |
| Rebound 0°C | | 8.7 | 8.1 | 7.3 |
| Rebound 100°C | | 45.2 | 58.9 | 40.8 |
| RPA - Tan Delta at 10% strain | % | 0.239 | 0.137 | 0.225 |
| Shore A Hardness at 23°C | | 66.1 | 68 | 64.3 |
| RPA - G' at 1% strain | MPa | 3.264 | 2.662 | 4.305 |
| RPA - G' at 10% strain | MPa | 1.388 | 1.572 | 1.715 |
| RPA - G' at 15% strain | MPa | 1.197 | 1.330 | 1.403 |
| RPA - G' at 50% strain | MPa | 0.751 | 0.778 | 0.801 |
| Dynamic loss modulus, G" at 6% strain, 90°C, 7.8 Hz | MPa | 0.456 | | 0.541 |
| Dynamic stiffness, G' at 6% strain, 90°C, 7.8 Hz | MPa | 1.640 | | 2.026 |
| Tan Delta at 6% strain, 90°C, 7.8 Hz | % | 0.277 | | 0.267 |

| | | | | |
|---|---|---|---|---|
| RPA= Rubber Process Analyzer. | | | | |

Cure properties including T₉₀ and T₂₅ are determined using a Monsanto oscillating disc rheometer (MDR). A description of oscillating disc rheometers can be found in the Vanderbilt rubber Handbook edited by Robert F. Ohm (Norwalk, Conn., R.T. Vanderbilt Company, Inc. 1990), pages 554-557. The use of this cure meter and standardized values read from the cure are specified in ASTM D-2084. A typical cure curve obtained on an oscillating disc rheometer is shown on page 55 of the 1990 edition of the Vanderbilt Rubber Handbook. The "T-points" (i.e., T₉₀, T₂₅, etc.) represent vulcanization states and are defined in ASTM D2084, D5289 and ISO 6502.

Tangent delta", or "tan delta," is a ratio of the shear loss modulus(G"), to the shear storage modulus (G'). These properties, namely the G', G" and tan delta, characterize the viscoelastic response of a rubber test sample to a tensile deformation at a fixed frequency and temperature, here measured at 90° C.

Tires for a truck are formed from rubber compositions 2 and 3 as illustrated in FIGURE 2 and run on a racetrack at high speed. The tires perform well, both in endurance and wet and dry stopping, when compared with conventional truck tires, as illustrated in TABLE 8.

**TABLE 8: Racetrack Performance**

| Driver | A | B | C | D | E | F | Average Improvement |
|---|---|---|---|---|---|---|---|
| Grip Level | | | | | | | |
| Initial Grip-Front | 1 | 0 | 3 | 2 | 0 | 0 | 1 |
| Initial Grip-Rear | 2 | 0 | 3 | 2 | 0 | 0 | 1.2 |
| Hot Grip-Front | 3 | 3 | 2 | 2 | 3 | 2 | 2.5 |
| Hot Grip-Rear | 2 | 0 | 3 | 2 | 3 | 2 | 2 |
| Overall Grip-Front | 2 | 0 | 3 | 2 | 3 | 2 | 2 |
| Overall Grip-Rear | 2 | 2 | 3 | 2 | 3 | 2 | 2.3 |
| Consistency-Front | 3 | 2 | 2 | 2 | 3 | 2 | 2.3 |
| Consistency-Rear | 3 | 0 | 3 | 3 | 3 | 2 | 2.3 |

| Handling Performance | | | | | | | |
|---|---|---|---|---|---|---|---|
| Braking-Start | 2 | 0 | 2 | 2 | 2 | 0 | 1.3 |
| Braking-End | 0 | 2 | 2 | 2 | 3 | 3 | 2 |
| Turn-in Response-Start | 2 | 2 | 3 | 2 | 2 | 0 | 1.8 |
| Turn-in Response-End | 3 | 2 | 0 | 2 | 3 | 3 | 2.2 |
| Change of Direction-Start | 2 | 0 | 3 | 2 | 2 | 0 | 1.5 |
| Change of Direction-End | 3 | 0 | 3 | 2 | 3 | 0 | 1.8 |
| High Speed Stability-Start | 2 | NA- | 2 | 2 | 2 | 0 | 1.6 |
| High Speed Stability-End | 2 | NA | 2 | 2 | 3 | 0 | 1.8 |
| Traction-Start | 3 | NA | 3 | 2 | 2 | 0 | 2.4 |
| Traction-End | 3 | 2 | 2 | 2 | 3 | 0 | 2 |
| Lap Time | NA | 3 sec faster | 3-5 Sec Faster | 4 sec faster | NA | NA | 3.6 |

| | | | | | | | |
|---|---|---|---|---|---|---|---|
| 0 means similar, 1 means similar or better, 2 means better, 3 means much better, NA means data not available. | | | | | | | |

Subjective tests, similar to those shown in TABLE 8, were also performed for tires for a truck in which rubber composition 1 is used for layer 14 and rubber composition 2 is used for layer 16 using the chimney design, as illustrated in FIGURE 2. Additional subjective tests were also performed for tires for a truck in which rubber composition 1 is used for layer 14' and rubber composition 2 is used for layer 16' using the L-shaped design, as illustrated in FIGURE 3. Finally, subjective tests were performed for tires for a truck in which rubber composition 3 is used for layer 14' and rubber composition 2 is used for layer 16' using the L-shaped design, as illustrated in FIGURE 3. Results for two combinations are shown in TABLE 9. Candidate 1 uses the chimney design with Composition 1 in region 14 and Composition 2 in region 16. Candidate 2 uses the L-shape design with Composition 3 in region 14' and Composition 2 in region 16'.

**TABLE 9: Subjective assessments of Driver**

| Candidate | 1 | 2 |
|---|---|---|
| Grip Level | | |
| Initial Grip-Front | 2 | 0 |
| Initial Grip-Rear | 0 | 0 |
| Hot Grip-Front | 3 | 2 |
| Hot Grip-Rear | 2 | 2 |
| Overall Grip-Front | 2 | 0 |
| Overall Grip-Rear | 2 | 2 |
| Consistency-Front | 3 | 0 |
| Consistency-Rear | 0 | 2 |

| Handling Performance | | |
|---|---|---|
| Braking-Start | 2 | 2 |
| Braking-End | 2 | 2 |
| Turn-in Response-Start | 2 | 2 |
| Turn-in Response-End | 3 | 2 |
| Change of Direction-Start | 2 | 2 |
| Change of Direction-End | 3 | 2 |
| High Speed Stability-Start | 0 | 0 |
| High Speed Stability-End | 0 | 0 |
| Traction-Start | 2 | 2 |
| Traction-End | 3 | 2 |

| | | |
|---|---|---|
| 0 means similar, 2 means better, 3 means much better. | | |

Based on the four combinations of rubber compositions and tread design, drivers found the tires with the L-shaped design, and in particular, using Composition 1 for layer 14', provided the best overall subjective performance, when considering the properties such as wet and dry grip, resistance to wear and tear, and the like.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A tire, preferably a racing tire, comprising a tread, the tread comprising:
a first layer formed of a first rubber composition, the first layer defining a first portion of a road-contacting surface of the tread; and
a second layer formed of a second rubber composition, the second layer defining a second portion of the road-contacting surface of the tread and being partially covered by the first layer;
**characterised in that** the first rubber composition comprising 70 to 92 parts per hundred parts by weight of rubber (phr) of a solution-polymerized styrene butadiene rubber and at least one of an isoprene rubber and a polybutadiene rubber, and 50 to 160 phr of silica; and
the second rubber composition comprising 70 to 100 phr of a polyisoprene rubber, 5 to 30 phr of silica, and carbon black,
wherein the second rubber composition comprises carbon black at a higher phr than the first rubber composition and
wherein the first rubber composition comprises a resin at a higher phr than the second rubber composition.

2. The tire of claim 1, wherein the second layer defines or includes a chimney which extends from a base portion, the chimney defining the second portion of the road-contacting surface of the tread.

3. The tire of claim 2, wherein the chimney defines an annulus around the tire and/or wherein the chimney defines less than 15 % of an axial width of the road-contacting surface of the tire.

4. The tire of at least one of the previous claims, wherein the first portion of the road-contacting surface is adjacent an inside shoulder of the tire and the second portion of the road-contacting surface is adjacent an outside shoulder of the tire.

5. The tire of claim 4, wherein the second layer defines a step intermediate the outside shoulder and the inside shoulder of the tire.

6. The tire of at least one of the previous claims, wherein the second layer defines at least 20 % and preferably up to 50 % of an axial width of the road-contacting surface of the tire.

7. The tire of at least one of the previous claims, wherein the first rubber composition comprises at least 10 phr of the resin.

8. The tire of at least one of the previous claims, wherein the second rubber composition comprises at least 30 phr of carbon black.

9. The tire of at least one of the previous claims, wherein the resin in the first rubber composition is selected from DCPD/C9 resins, alpha methyl styrene resins, styrene/alpha methyl styrene resins, modified rosins and mixtures thereof.

10. The tire of at least one of the previous claims, wherein the first and second rubber compositions each comprise an organosilane coupling agent.

11. The tire of at least one of the previous claims, wherein the first and second rubber compositions each comprise a cure package, the cure package comprising a sulfur-based curing agent, a cure activator, and a cure accelerator.

12. The tire of at least one of the previous claims, wherein
the first rubber composition comprises:
70 to 92 phr, alternatively 75 to 90 phr, of the solution-polymerized styrene butadiene rubber,
0 to 30 phr, alternatively 10 to 25 phr, of the polyisoprene rubber,
0 to 30 phr, alternatively 0 to 2 phr, of the polybutadiene rubber,
50 to 160 phr, alternatively 100 to 150 phr, of silica,
0 to 25 phr, alternatively 0 to 15 phr, of carbon black,
2 to 70 phr, alternatively 4 to 10 phr, of processing oil,
10 to 70 phr, alternatively 20 to 60 phr, of resin,
2 to 20 phr of an organosilane coupling agent, and
a cure package including a sulfur-based curing agent, zinc oxide, a fatty acid, and an accelerator, and wherein
the second rubber composition comprises:
70 to 100 phr, alternatively 90 to 100 phr, of the polyisoprene rubber,
5 to 25 phr, alternatively 10 to 20 phr, of silica,
30 to 60 phr, alternatively 30 to 50 phr, of carbon black,
no more than 5 phr, alternatively no more than 2 phr, of resin,
1 to 10 phr, alternatively 1 to 5 phr, of processing oil, and
a cure package including a sulfur-based curing agent, zinc oxide, a fatty acid, and an accelerator.

13. The tire of at least one of the previous claims, wherein the first rubber composition comprises:
85 to 92 phr of the solution-polymerized styrene butadiene rubber,
0 to 2 phr of the polyisoprene rubber,
8 to 15 phr of the polybutadiene rubber,
90 to 120 phr of the silica,
15 to 25 phr of the carbon black,
5 to 60 phr of the processing oil, and
10 o 30 phr of the resin.

14. The tire of at least one of the previous claims, wherein the solution-polymerized styrene butadiene rubber comprises:
30 to 70 phr of a first solution-polymerized styrene butadiene rubber the first solution-polymerized styrene butadiene rubber having a bound styrene content of from 30 to 50 wt. %, a vinyl 1,2 content of from 10 to 40 wt. %, based on the rubber weight, and a glass transition temperature (Tg) of -40° C to -20° C; and
30 to 70 phr of a second solution-polymerized styrene butadiene rubber, the second solution-polymerized styrene butadiene rubber having a bound styrene content of from 25 to 45 wt. %, a vinyl 1,2 content of from 20 to 60 wt. %, based on the rubber weight, and a Tg of from -30°C to -5°C;
the first and second solution-polymerized styrene butadiene rubbers having a difference in Tg of 10°C to 20°C; and
at least one of the first and second solution-polymerized styrene butadiene rubbers has a weight average molecular weight of greater than 1,000,000.

15. A method of forming a tread for a tire, preferably a racing tire, the method comprising:
forming a first rubber composition, the first rubber composition comprising 70 to 92 phr of a solution-polymerized styrene butadiene rubber, at least one of an isoprene rubber and a polybutadiene rubber, 50 to 160 phr of silica, at least 10 phr of a resin, and 0 to 25 phr of carbon black;
forming a second rubber composition, the second rubber composition comprising 70 to 100 phr of a polyisoprene rubber, 5 to 25 phr of silica, and 20 to 60 phr of carbon black;
forming a first layer from the first rubber composition such that the first layer defines a first portion of a road-contacting surface of the tread;
forming a second layer from the second rubber composition, such that the second layer defines a second portion the road-contacting surface of the tread and is partially covered by the first layer; and
curing the first and second layers to form the tire tread.

## Patentansprüche

1. Reifen, vorzugsweise ein Rennreifen, der eine Lauffläche umfasst; wobei die Lauffläche Folgendes umfasst:
eine erste Schicht, die aus einer ersten Kautschukzusammensetzung erzielt wird; wobei die erste Schicht einen ersten Abschnitt einer Oberfläche der Lauffläche definiert, die mit der Straße in Kontakt kommt; und
eine zweite Schicht, die aus einer zweiten Kautschukzusammensetzung erzielt wird; wobei die zweite Schicht einen zweiten Abschnitt einer Oberfläche der Lauffläche definiert, die mit der Straße in Kontakt kommt, und teilweise von der ersten Schicht bedeckt ist;
**dadurch gekennzeichnet, dass**
die erste Kautschukzusammensetzung 70 bis 92 Teile pro hundert Gewichtsteile Kautschuk (ThK) eines Styrol-Butadien-Kautschuks, der in Lösung polymerisiert worden ist, und mindestens einen Kautschuk, ausgewählt aus einem Isoprenkautschuk und einem Polybutadien-Kautschuk, umfasst; sowie 50 bis 160 ThK Silica; und
die zweite Kautschukzusammensetzung 70 bis 100 ThK eines Polyisoprenkautschuks, 5 bis 30 ThK Silica und Ruß umfasst;
wobei die zweite Kautschukzusammensetzung Ruß in einer ThK-Menge umfasst, die größer ist als die der ersten Kautschukzusammensetzung; und
wobei die erste Kautschukzusammensetzung ein Harz in einer ThK-Menge umfasst, die größer ist als die der zweiten Kautschukzusammensetzung.

2. Reifen nach Anspruch 1, wobei die zweite Schicht einen Schacht definiert oder einschließt, der sich von einem Basisschicht-Abschnitt erstreckt; wobei der Schacht den zweiten Abschnitt der Oberfläche der Lauffläche definiert, die die Straße berührt.

3. Reifen nach Anspruch 2, wobei der Schacht einen Ringraum um den Reifen herum definiert und/oder wobei der Schacht weniger als 15% einer axialen Breite der Oberfläche der Lauffläche definiert, die die Straße berührt.

4. Reifen nach mindestens einem der vorhergehenden Ansprüche, wobei der erste Abschnitt der Lauffläche, der mit der Straße in Kontakt kommt, angrenzend an eine innere Schulter des Reifens angebracht ist, und der zweite Abschnitt der Lauffläche, der mit der Straße in Kontakt kommt, angrenzend an eine äußere Schulter des Reifens angebracht ist.

5. Reifen nach Anspruch 4, wobei die zweite Schicht eine Zwischenhöhe zwischen der äußeren und der inneren Schulter des Reifens definiert.

6. Reifen nach mindestens einem der vorhergehenden Ansprüche, wobei die zweite Schicht mindestens 20 % und vorzugsweise bis zu 50 % einer axialen Breite der Oberfläche des Reifens definiert, die mit der Straße **in** Kontakt kommt.

7. Reifen nach mindestens einem der vorhergehenden Ansprüche, wobei die erste Kautschukzusammensetzung mindestens 10 ThK des Harzes umfasst.

8. Reifen nach mindestens einem der vorhergehenden Ansprüche, wobei die zweite Kautschukzusammensetzung mindestens 30 ThK Ruß umfasst.

9. Reifen nach mindestens einem der vorhergehenden Ansprüche, wobei das Harz **in** der ersten Kautschukzusammensetzung ausgewählt ist aus Harzen vom DCPD/C₉-Typ; alpha-Methylstyrolharzen; Styrol/alpha-Methylstyrolharzen; modifizierten Kolophoniumharzen sowie Mischungen davon.

10. Reifen nach mindestens einem der vorhergehenden Ansprüche, wobei die erste Kautschukzusammensetzung und die zweite Kautschukzusammensetzung jeweils ein Organosilan-Kupplungsmittel umfassen.

11. Reifen nach mindestens einem der vorhergehenden Ansprüche, wobei die erste Kautschukzusammensetzung und die zweite Kautschukzusammensetzung jeweils ein Vulkanisationssystem umfassen; wobei das Vulkanisationssystem ein Vulkanisationsmittel auf Basis von Schwefel, einen Vulkanisationsaktivator und einen Vulkanisationsbeschleuniger umfasst.

12. Reifen nach mindestens einem der vorhergehenden Ansprüche, wobei:
die erste Kautschukzusammensetzung Folgendes umfasst:
70 bis 92 ThK, alternativ 75 bis 90 ThK, Styrol-Butadien-Kautschuk, der in Lösung polymerisiert wurde;
0 bis 30 ThK, alternativ 10 bis 25 ThK, Polyisoprenkautschuk;
0 bis 30 ThK, alternativ 0 bis 2 ThK, Polybutadienkautschuk;
50 bis 160 ThK, alternativ 100 bis 150 ThK, Silica;
0 bis 25 ThK, alternativ 0 bis 15 ThK, Ruß;
2 bis 70 ThK, alternativ 4 bis 10 ThK, eines Prozessöls;
10 bis 70 ThK, alternativ 20 bis 60 ThK, eines Harzes;
2 bis 20 ThK eines Organosilan-Kupplungsmittels; und
ein System zur Vulkanisation, das ein Vulkanisationsmittel auf Basis von Schwefel, Zinkoxid, eine Fettsäure und einen Beschleuniger enthält;
wobei die zweite Kautschukzusammensetzung Folgendes umfasst:
70 bis 100 ThK, alternativ 90 bis 100 ThK, Polyisoprenkautschuk;
5 bis 25 ThK, alternativ 10 bis 20 ThK, Silica-haltig;
30 bis 60 ThK, alternativ 30 bis 50 ThK, Ruß;
nicht mehr als 5 ThK, alternativ nicht mehr als 2 ThK, eines Harzes;
1 bis 10 ThK, alternativ 1 bis 5 ThK, eines Prozessöls; und
ein System zur Vulkanisation, das ein Vulkanisationsmittel auf Basis von Schwefel, Zinkoxid, eine Fettsäure und einen Beschleuniger enthält.

13. Reifen nach mindestens einem der vorhergehenden Ansprüche, wobei:
die erste Kautschukzusammensetzung Folgendes umfasst:
85 bis 92 ThK Styrol-Butadien-Kautschuk, der in Lösung polymerisiert wurde;
0 bis 2 ThK des Polyisoprenkautschuks;
8 bis 15 ThK Polybutadien-Kautschuk;
90 bis 120 ThK Silica-haltig;
15 bis 25 ThK Ruß;
5 bis 60 ThK Prozessöl; und
10 bis 30 ThK des Harzes.

14. Reifen nach mindestens einem der vorhergehenden Ansprüche, wobei der **in** Lösung polymerisierte Styrol-Butadien-Kautschuk Folgendes umfasst:
30 bis 70 ThK eines ersten Styrol-Butadien-Kautschuks, der in Lösung polymerisiert worden ist; wobei der erste Styrol-Butadien-Kautschuk, der **in** Lösung polymerisiert worden ist, einen Gehalt an gebundenem Styrol von 30 bis 50 Gew.-%, einen Gehalt an 1,2-Vinyleinheiten von 10 bis 40 Gew.-%, bezogen auf das Gewicht des Kautschuks, und eine Glasübergangstemperatur (Tg) von -40 °C bis - 20 °C aufweist; und
30 bis 70 ThK eines zweiten Styrol-Butadien-Kautschuks, der in Lösung polymerisiert wurde; wobei der zweite Styrol-Butadien-Kautschuk, der in Lösung polymerisiert wurde, einen Gehalt an gebundenem Styrol von 25 bis 45 Gew.-%, einen Gehalt an 1,2-Vinyleinheiten von 20 bis 60 Gew.-%, bezogen auf das Gewicht des Kautschuks, und eine Glasübergangstemperatur (Tg) von -30°C bis -5 °C aufweist;
wobei der erste und der zweite Styrol-Butadien-Kautschuk, die in Lösung polymerisiert wurden, einen Unterschied bezüglich des Tg-Wertes von 10 °C bis 20 °C aufweisen; und
wobei mindestens ein Kautschuk aus dem ersten und dem zweiten Styrol-Butadien-Kautschuk, die **in** Lösung polymerisiert wurden, ein gewichtsmittleres Molekulargewicht aufweist, das größer als 1.000.000 ist.

15. Verfahren zur Bildung einer Lauffläche für einen Reifen, vorzugsweise für einen Rennreifen; wobei das Verfahren Folgendes umfasst:
das Bereitstellen einer ersten Kautschukzusammensetzung; wobei die erste Kautschukzusammensetzung 70 bis 92 ThK eines Styrol-Butadien-Kautschuks, der in Lösung polymerisiert wurde, mindestens einen Kautschuk, ausgewählt aus einem Isoprenkautschuk und einem Polybutadien-Kautschuk; 50 bis 160 ThK Silica; mindestens 10 ThK eines Harzes und 0 bis 25 ThK Ruß umfasst;
das Bereitstellen einer zweiten Kautschukzusammensetzung; wobei die zweite Kautschukzusammensetzung 70 bis 100 ThK eines Polyisoprenkautschuks; 5 bis 25 ThK Silica; und 20 bis 60 ThK Ruß umfasst;
das Bilden einer ersten Schicht aus der ersten Kautschukzusammensetzung derart, dass die erste Schicht einen ersten Abschnitt einer Oberfläche der Lauffläche definiert, die mit der Straße **in** Kontakt kommt;
das Bilden einer zweiten Schicht aus der zweiten Kautschukzusammensetzung derart, dass die zweite Schicht einen zweiten Abschnitt einer Oberfläche der Lauffläche definiert, die mit der Straße **in** Kontakt kommt und teilweise von der ersten Schicht bedeckt ist; und
das Vulkanisieren der ersten und der zweiten Schicht, um die Lauffläche des Reifens zu erzielen.

## Revendications

1. Bandage, de préférence un bandage de course, qui comprend une bande de roulement ; dans lequel la bande de roulement comprend :
une première couche que l'on obtient à partir d'une première composition de caoutchouc ; dans lequel la première couche définit une première portion d'une surface de la bande de roulement, qui entre en contact avec la route ; et
une deuxième couche que l'on obtient à partir d'une deuxième composition de caoutchouc ; dans lequel la deuxième couche définit une deuxième portion de la surface de la bande de roulement, qui entre en contact avec la route, et est en partie recouverte par la première couche ;
**caractérisé en ce que**
la première composition de caoutchouc comprend de 70 à 92 parties par cent parties en poids de caoutchouc (phr) d'un caoutchouc de styrène butadiène qui a été polymérisé en solution, et au moins un caoutchouc choisi parmi un caoutchouc d'isoprène et un caoutchouc de polybutadiène ; ainsi que de 50 à 160 phr de silice ; et
la deuxième composition de caoutchouc comprend de 70 à 100 phr d'un caoutchouc de polyisoprène, de 5 à 30 phr de silice, et du noir de carbone ;
dans lequel la deuxième composition de caoutchouc comprend du noir de carbone en une quantité de phr qui est supérieure à celle de la première composition de caoutchouc ; et
dans lequel la première composition de caoutchouc comprend une résine en une quantité de phr qui est supérieure à celle de la deuxième composition de caoutchouc.

2. Bandage selon la revendication 1, dans lequel la deuxième couche définit ou englobe une cheminée qui s'étend à partir d'une portion de base ; dans lequel la cheminée définit la deuxième portion de la surface de la bande de roulement, qui entre en contact avec la route.

3. Bandage selon la revendication 2, dans lequel la cheminée définit un espace annulaire autour du bandage et/ou dans lequel la cheminée définit moins de 15 % d'une largeur axiale de la surface de la bande de roulement, qui entre en contact avec la route.

4. Bandage selon au moins une des revendications précédentes, dans lequel la première portion de la surface de la bande de roulement, qui entre en contact avec la route, est disposée en position adjacente à un épaulement interne du bandage et la deuxième portion de la surface de la bande de roulement, qui entre en contact avec la route, est disposée en position adjacente à un épaulement externe du bandage.

5. Bandage selon la revendication 4, dans lequel la deuxième couche définit une hauteur intermédiaire entre l'épaulement externe et l'épaulement interne du bandage.

6. Bandage selon au moins une des revendications précédentes, dans lequel la deuxième couche définit au moins 20 %, et de préférence jusqu'à 50 % d'une largeur axiale de la surface du bandage, qui entre en contact avec la route

7. Bandage selon au moins une des revendications précédentes, dans lequel la première composition de caoutchouc comprend au moins 10 phr de la résine.

8. Bandage selon au moins une des revendications précédentes, dans lequel la deuxième composition de caoutchouc comprend au moins 30 phr de noir de carbone.

9. Bandage selon au moins une des revendications précédentes, dans lequel la résine dans la première composition de caoutchouc est choisie parmi des résines de type DCPD/en C₉ ; des résines d'alpha méthyl styrène ; des résines de styrène/ alpha méthyl styrène ; des colophanes modifiées, ainsi que leurs mélanges.

10. Bandage selon au moins une des revendications précédentes, dans lequel la première composition de caoutchouc et la deuxième composition de caoutchouc comprennent chacune un agent de couplage de type organosilane.

11. Bandage selon au moins une des revendications précédentes, dans lequel la première composition de caoutchouc et la deuxième composition de caoutchouc comprennent chacune un système de vulcanisation ; dans lequel le système de vulcanisation comprend un agent de vulcanisation à base de soufre, un activateur de la vulcanisation et un accélérateur de la vulcanisation.

12. Bandage selon au moins une des revendications précédentes, dans lequel :
la première composition de caoutchouc comprend :
de 70 à 92 phr, en variante de 75 à 90 phr, du caoutchouc de styrène butadiène qui a été polymérisé en solution ;
de 0 à 30 phr, en variante de 10 à 25 phr, du caoutchouc de polyisoprène ;
de 0 à 30 phr, en variante de 0 à 2 phr, du caoutchouc de polybutadiène ;
de 50 à 160 phr, en variante de 100 à 150 phr, de silice ;
de 0 à 25 phr, en variante de 0 à 15 phr, de noir de carbone ;
de 2 à 70 phr, en variante de 4 à 10 phr, d'une huile de procédé ;
de 10 à 70 phr, en variante de 20 à 60 phr, d'une résine ;
de 2 à 20 phr d'un agent de couplage de type organosilane ; et
un système de vulcanisation qui englobe un agent de vulcanisation à base de soufre, de l'oxyde de zinc, un acide gras, et un accélérateur ; et dans lequel
la deuxième composition de caoutchouc comprend :
de 70 à 100 phr, en variante de 90 à 100 phr, du caoutchouc de polyisoprène ;
de 5 à 25 phr, en variante de 10 à 20 phr, de silice ;
de 30 à 60 phr, en variante de 30 à 50 phr, de noir de carbone ;
pas plus de 5 phr, en variante pas plus de 2 phr, d'une résine ;
de 1 à 10 phr, en variante de 1 à 5 phr, d'une huile de procédé ; et
un système de vulcanisation qui englobe un agent de vulcanisation à base de soufre, de l'oxyde de zinc, un acide gras, et un accélérateur.

13. Bandage selon au moins une des revendications précédentes, dans lequel :
la première composition de caoutchouc comprend :
de 85 à 92 phr du caoutchouc de styrène butadiène qui a été polymérisé en solution ;
de 0 à 2 phr du caoutchouc de polyisoprène ;
de 8 à 15 phr du caoutchouc de polybutadiène ;
de 90 à 120 phr de la silice ;
de 15 à 25 phr du noir de carbone ;
de 5 à 60 phr de l'huile de procédé ; et
de 10 à 30 phr de la résine.

14. Bandage selon au moins une des revendications précédentes, dans lequel le caoutchouc de styrène butadiène qui a été polymérisé en solution comprend :
de 30 à 70 phr d'un premier caoutchouc de styrène butadiène qui a été polymérisé en solution ; dans lequel le premier caoutchouc de styrène butadiène qui a été polymérisé en solution possède une teneur en styrène lié allant de 30 à 50 % en poids, une teneur en unités vinyle 1,2 allant de 10 à 40 % en poids, lorsqu'on se base sur le poids du caoutchouc, et une température de transition vitreuse (Tg) de -40 °C à -20 °C ; et
de 30 à 70 phr d'un deuxième caoutchouc de styrène butadiène qui a été polymérisé en solution ; dans lequel le deuxième caoutchouc de styrène butadiène qui a été polymérisé en solution possède une teneur en styrène lié allant de 25 à 45 % en poids, une teneur en unités vinyle 1,2 allant de 20 à 60 % en poids, lorsqu'on se base sur le poids du caoutchouc, et une température de transition vitreuse (Tg) de -30 °C à -5 °C ;
dans lequel le premier et le deuxième caoutchouc de styrène butadiène qui ont été polymérisés en solution possèdent une différence, en ce qui concerne la valeur Tg, de 10 °C à 20 °C ; et
dans lequel au moins un caoutchouc parmi le premier et le deuxième caoutchouc de styrène butadiène qui ont été polymérisés en solution possède un poids moléculaire moyen en poids qui est supérieur à 1.000.000.

15. Procédé de formation d'une bande de roulement pour un bandage, de préférence pour un bandage de course ; dans lequel le procédé comprend le fait de :
préparer une première composition de caoutchouc ; dans lequel la première composition de caoutchouc comprend de 70 à 92 phr d'un caoutchouc de styrène butadiène qui a été polymérisé en solution, au moins un caoutchouc choisi parmi un caoutchouc d'isoprène et un caoutchouc de polybutadiène ; de 50 à 160 phr de silice ; au moins 10 phr d'une résine et de 0 à 25 phr de noir de carbone ;
préparer une deuxième composition de caoutchouc ; dans lequel la deuxième composition de caoutchouc comprend de 70 à 100 phr d'un caoutchouc de polyisoprène ; de 5 à 25 phr de silice ; et de 20 à 60 phr de noir de carbone ;
former une première couche à partir de la première composition de caoutchouc d'une manière telle que la première couche définit une première portion d'une surface de la bande de roulement, qui entre en contact avec la route ;
former une deuxième couche à partir de la deuxième composition de caoutchouc d'une manière telle que la deuxième couche définit une deuxième portion d'une surface de la bande de roulement, qui entre en contact avec la route, et est en partie recouverte par la première couche ; et
vulcaniser la première et la deuxième couche afin d'obtenir la bande de roulement du bandage.
